# EUROPEAN PATENT SPECIFICATION

(11) **EP 3 591 343 B1**
(45) Date of publication and mention of the grant of the patent: **26.10.2022**
(21) Application number: 18305872.6
(22) Date of filing: 04.07.2018
(51) Int. Cl.: G01D 5/14, G01D 3/10

(54) **PILOT CONTROL UNIT COMPRISING A REDUNDANT POSITION SENSOR**
PILOTSTEUERGERÄT MIT EINEM REDUNDANTEN POSITIONSSENSOR
UNITÉ DE COMMANDE PILOTE COMPRENANT UN CAPTEUR DE POSITION REDONDANT

(43) Date of publication of application: 08.01.2020
(73) Proprietor: Ratier-Figeac SAS, 46101 Figeac Cedex (FR)
(72) Inventor: Antraygue, Cédric, 46100 FIGEAC (FR)
(74) Representative: Dehns

(56) References cited:
- EP-A1- 2 881 714
- WO-A2-2011/085968
- DE-A1- 10 360 042
- US-A1- 2006 274 040
- US-A1- 2017 291 640
- US-B2- 7 382 120

## Description

### TECHNICAL FIELD

The examples described herein relate to a pilot control unit comprising a position sensor. In particular, the examples described herein relate to position sensors that are used in an aircraft.

### BACKGROUND

Potentiometers are commonly used in aircraft pilot control units (such as in side stick units, thrust control assemblies etc.) as position feedback to aircraft systems (such as flight control systems, engine control systems etc.). These devices present the advantages that they are simple in terms of their electrical interface (analogue DC voltages) and they are also stackable in a limited volume so that they can easily present multiple outputs in a small envelope. For example, 4 outputs on a single shaft may be provided. In some examples, 2 or 3 outputs are also used. In some cases, a discrete output or switch output may also be provided on the shaft.

Although such potentiometers provide these advantages, it would be further advantageous if the wear and endurance of such devices were also able to be improved.

EP 2815211 B1 describes a rotary position sensor device that comprises a rotary position sensor and an electronic circuit. The rotary position sensor includes a rotatable magnet creating a magnetic field and at least one of a pair of first and second magnetic field sensors. The magnetic field sensors of each pair are offset by 90° to each other. The device therefore uses a magnetic sensor to emulate an AC voltage RVDT interface.

WO2011/085968 A2 and DE 103 60 042 A1 show rotary position sensors with additional redundant sensors on a PCB and US2006/274040 A1 and EP 2 881 714 A1 each show pilot control unit comprising a rotary position sensor.

### SUMMARY

A pilot control unit for an aircraft is provided as claimed in claim 1.

Although the magnet rotates, the PCBs remain stationary relative to the magnet.

In any of the examples described herein, the first IC may be provided on a first face of the second PCB and the second IC may be provided on a second, opposite face of the second PCB.

In any of the examples described herein, the first PCB may have the first IC provided on a first face of the first PCB and the second IC provided on a second, opposite face of the first PCB.

In some examples, the output or outputs may be a switch output.

The sensors described herein are contactless in that they do not have the metal wiper and resistive track of known sensors that use potentiometers.

The sensor may comprise a sensor housing, and the rotatable magnet may be provided within the housing.

In any of the examples described herein, the ICs may be positioned adjacent to, or at least in the proximity of, the magnet. They are provided to one side of the magnet.

In any of the examples described herein, the IC may be positioned so as to be located on the rotation axis of the magnet X. In some examples, the distance of the PCBs from the magnets may be in the region of 0.5mm to 9mm. The measuring point of the IC or ICs may be located on the X axis.

In any of the examples described herein, the sensor may comprise first and second PCBs, each of which have an IC or ICs provided on opposite faces of the PCBs.

In any of the examples described herein, the PCBs may be made of epoxy or other nonmagnetic material(s).

In some examples, for the first PCB, PCB tracks allocated to a first IC may be located on a first face of the first PCB, whereas PCB tracks allocated to the second IC may be located on the second face of the first PCB.

For examples wherein more than one PCB is used, PCB tracks allocated to a first IC of the second PCB may be located on a first face of the second PCB, whereas PCB tracks allocated to the second IC may be located on the second face of the second PCB.

A shaft and magnet assembly is also described herein that comprises a rotating shaft which rotates about the axis X. The rotating shaft may be positioned between first and second bearings.

In any of the examples described herein, the rotating shaft may have an outer circumference and the first and second bearings may be positioned to extend around the outer circumference of the rotating shaft. In any of the examples described herein, a first end of the rotating shaft may have a smaller diameter and outer circumference than the opposite and second end of the shaft. The first end of the shaft is the end that in use extends through the opening in the housing as described above.

In any of the examples described herein, the magnet may be connected to the second end of the shaft.

In any of the examples described herein, the magnet may be fixed in position onto the shaft with a magnet cover and pin.

A sensor stator is described herein that comprises first and second PCBs each having first and second opposite faces, each face having at least one IC attached thereto.

In any of the examples described herein, the sensor provides, via the plurality of ICs, a plurality of several outputs on a single shaft.

A method of making a DC voltage rotary position sensor is also provided as claimed in claim 5.

The method may further comprise providing a first IC on a first face of said second PCB and providing said second IC on a second, opposite face of said second PCB. The method may further comprise providing a first IC on a first face of said first PCB and providing a second IC on a second, opposite face of said first PCB.

### BRIEF DESCRIPTION OF THE DRAWINGS

Figure 1 depicts a schematic diagram of a known position sensor.
Figure 2a depicts an example of a new type of rotary position sensor according to the examples described herein.
Figure 2b depicts a cross-section of the new type of rotary position sensor shown in figure 2a.
Figure 3 shows an exploded view of the new type of rotary position sensor shown in figures 2a and 2b.
Figure 4 shows an exploded view of the rotating shaft and magnet assembly of figure 3.
Figure 5 depicts an exploded view of a new type of sensor stator according to the examples described herein.

### DETAILED DESCRIPTION

Potentiometers are commonly used in aircraft pilot control units (such as in side stick units, thrust control assemblies etc.) as continuous or discrete position feedback to aircraft systems (such as flight control systems, engine control systems etc.). These devices are able to provide 2, 3 or 4 outputs on a single shaft.

As is known in the art, a potentiometer is made of a conductive plastic track (for infinite resolution and low electrical noise) attached to a potentiometer housing. A metal wiper (multi-fingered) is attached to a potentiometer shaft and the metal wiper rotates and slides onto a resistive track. A slip ring is used to electrically connect the rotating wiper onto the housing.

It has been found, however, that a main drawback of the potentiometers that are currently used in position sensors (such as those found in pilot controls, for example) is due to this contact between their wiper and their resistive track, in that this contact between the wiper and resistive track results in wearing of the track during the rotation of the wiper. The endurance of the sensor is therefore reduced.

This wearing can lead to many negative results including a) loss of performance (e.g. increased accuracy and/or noise), b) in some cases a partial loss of contact inducing output voltage drop (and therefore an increase in contact resistance), c) in other cases a complete loss of contact (and therefore no more output signal).

The examples described herein aim to overcome these disadvantages to produce an improved rotary position sensor that does not wear as quickly and that has greater endurance. This is achieved in the examples described herein by replacing the potentiometer that is used in standard position sensors with a contactless sensor.

Although the use of some contactless inductive sensors is known in the general field of aerospace, (e.g. rotary variable differential transformers (RVDTs) are commonly used in aerospace applications for other uses), it would not be desirable or even possible to use such sensors in a pilot control. This is because any RVDT that was capable of presenting several outputs on a single shaft would be significantly larger in size than even potentiometers. There would therefore not be enough room in the pilot control to incorporate such sensors.

Moreover, the electrical interface of RVDTs is more complex than the examples described herein as it is AC voltage. The examples therefore also aim to overcome these issues with known contactless sensors by providing a contactless sensor for use in a pilot control that is much smaller than those commonly used in aerospace applications. Further in contrast to these known sensors, wherein a magnetic sensor is used to emulate an AC voltage RVDT interface, in the examples described herein a DC potentiometer interface is used.

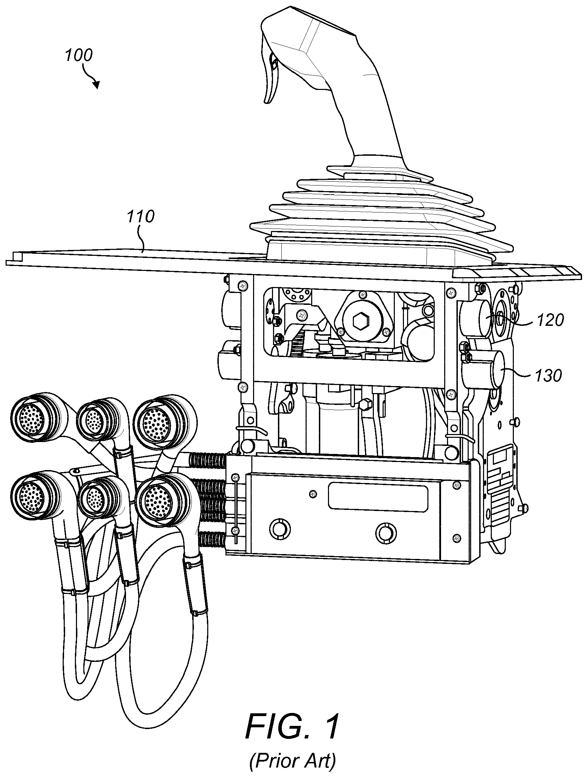

Figure 1 provides an overview of a known position sensor 100 showing a side stick unit 110, a three tracks potentiometer 120 and a four tracks potentiometer 130.

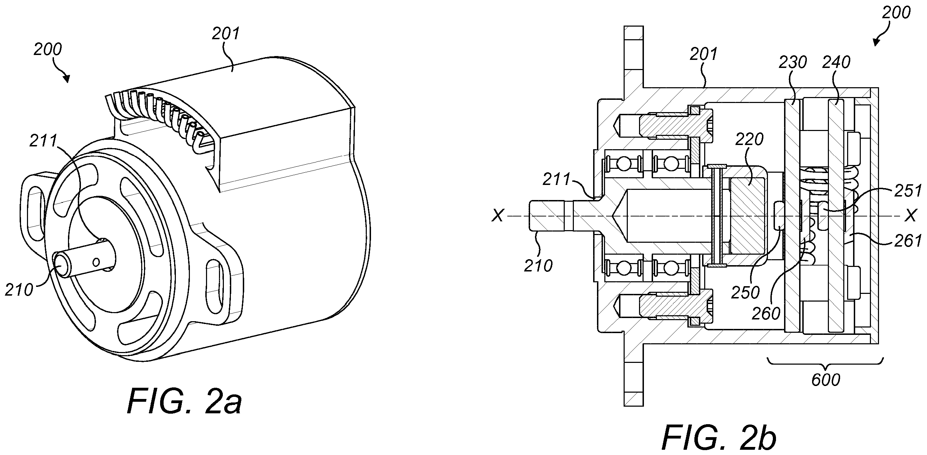

Figures 2a and 2b depict an example of a new type of rotary position sensor 200. Figure 2b is a cross-section of the rotary position sensor 200 shown in figure 2a. The rotary position sensor 200 comprises a sensor body or housing 201 that has an opening 211 located therein to allow for a rotatable output shaft 210 to extend therethrough and therefrom. In use, the output shaft 210 may be connected to a pinion/gear or anti-backlash gears (in some cases with a preloaded idler pinion to compensate for free play). In some examples, the shaft may be a spline or an anti-backlash spline.

Internally to the sensor housing 201 the sensor comprises a rotatable magnet 220 which is rotatable about an axis of rotation X and thereby creates a magnetic field within the magnet and its vicinity as it is rotated about the axis X. The sensor 200 may further comprise two or more printed circuit boards (PCBs) which remain stationary while the magnet rotates. In the example shown in figure 2b, the sensor 200 comprises first and second printed circuit boards, 230, 240, each having at least one integrated circuit (IC) provided thereon. In other examples not forming part of the invention, however, only one PCB may be provided. In this example, each PCB 230, 240 has two ICs 250, 260, 251, 261 provided thereon. The two PCBs with the first, second, third and fourth ICs 250, 260, 251, 261 are positioned adjacent to, or at least in the proximity of, the magnet 220, and to one side of the magnet so as to be able to sense the direction of the magnetic field as the magnet rotates. The magnet should be positioned so as to be located on the rotation axis of the magnet X. In some examples, the distance of the PCBs from the magnets may be in the region of 0.5mm to 9mm. By detecting the direction of the magnetic field, the sensor is able to provide position information to a pilot control unit (not shown).

The IC or ICs provide outputs for the sensor. The presence of the ICs provided on each opposite face of each of the PCBs therefore also provides several outputs on a single shaft. One or more of these outputs may therefore be used as a redundant output that may be used in the form of a back-up or fail-safe, to thereby improve the reliability of the sensor.

In addition to this, since in the example shown in figure 2b the ICs 250, 260, 251, 261 are positioned on both sides of the two PCBs, the proposed envelope is lower than one containing a potentiometer presenting the same number of outputs (i.e. four outputs in this example).

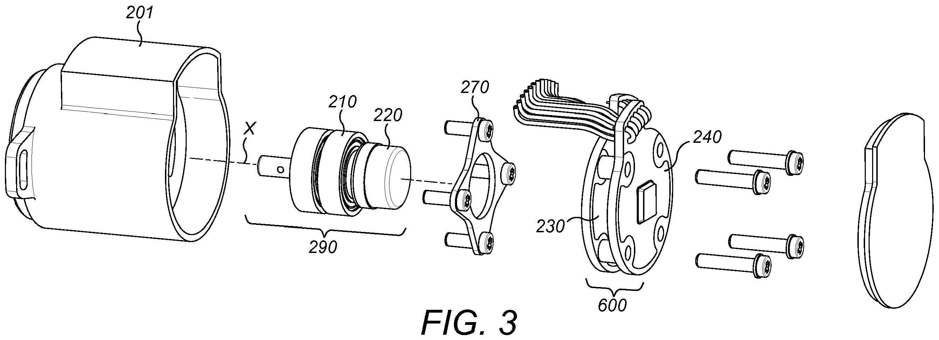

An exploded view of Figure 2a is depicted in figure 3. As can be seen, the components are held in position relative to each other (albeit some components being rotatable relative to other components) using fixing means, which in this example comprises a clamp 270 for clamping shaft bearings onto the housing 201 and connecting rods e.g. screws or other fixing means. The PCBs are referenced as 600. The examples described herein are not limited to this, however, and other means of fixing the components together may be used.

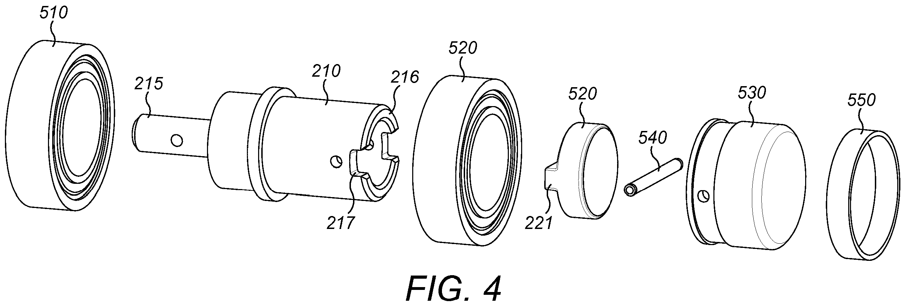

Figure 4 depicts an exploded view of the rotating shaft and magnet assembly 290 as shown in figure 3. This shaft and magnet assembly 290 comprises the rotating shaft 210 positioned between first and second bearings 510, 520. The first and second bearings 510, 520 are positioned to extend around the outer circumference of the rotating shaft 210. A first end 215 of the rotating shaft 210 has a smaller diameter and outer circumference than the opposite and second end 216 of the shaft 210. The first end 215 of the shaft 210 is the end that in use extends through the opening in the housing 201 as described above.

The magnet 220, 520 is provided on this rotatable shaft and in this example is connected to the second end 216 of the shaft 210. This may be achieved in a number of ways, however, in this example, the magnet 220, 520 has a protruding section or sections 221 that is/are shaped and sized to fit into a correspondingly shaped and sized cut-out section(s) 217 provided at the second end 216 of the shaft 210. The magnet 220 is then slotted into place and then further held in place with a magnet cover 530, bearing 550 and pin 540. Other means of holding the magnet 220, 520 in place on the shaft 210 are also envisaged and the examples described herein are not limited to this specific example.

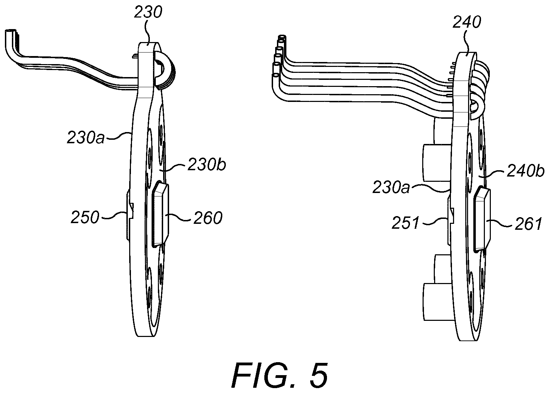

Figure 5 depicts an exploded view of the sensor stator. The sensor stator comprises first and second PCBs, 230, 240, having first 230a, 240a and second faces 230b, 240b, each of which have an IC 250, 260, 251, 261 attached thereto.

In summary, the DC voltage rotary position sensor 200 described herein therefore comprises a shaft and magnet assembly 290 comprising a rotatable shaft 210 having a magnet 220 provided thereon. The shaft and magnet assembly 290 is rotatable about an axis of rotation X to create a rotary magnetic field. The PCBs on the other hand do not rotate and remain stationary. A first PCB 230 is located at a first side of the magnet 200 and on the axis of rotation X. This first PCB 230 has a first IC 250 provided thereon and the PCB is configured to sense the direction of the magnetic field as the magnet 220 rotates about the axis X. In this way, the sensor provides a positional sensor that allows for the determination of the relative movement and position of the sensor.

In a similar way, the method of making this DC voltage rotary position sensor 200 comprises providing the magnet 220 on the rotating shaft 210 to create the rotatable shaft and magnet assembly 290 discussed above. As also mentioned above, the magnet and shaft assembly 290 is configured to be rotatable about an axis of rotation X to create the magnetic field. The method further comprises providing the first PCB 230 at the first side of the magnet 220 and on the axis of rotation X and also providing the first IC 250 on the first PCB 230. As mentioned above, the first PCB 250 is configured to sense the direction of the magnetic field as the magnet 220 rotates about the axis X.

This new type of sensor has advantages in that it is contactless and can also present several outputs on a single shaft. In addition to this, since the ICs 250, 260, 251, 261 may be placed on each opposite face of the two PCBs, the proposed envelope is lower than one containing a potentiometer presenting the same number of outputs (i.e. four outputs in this example).

The examples described herein can further use dual die ICs (i.e. 2 segregated outputs in one single packaging) in order to increase the number of outputs with the same number of PCBs.

The ICs used in the examples described herein may be magnetic field direction sensors which may be of several types:
- fully analogue with outputs proportional to sinus and cosine of magnetic field direction
- fully digital, with magnetic field angle digital output
- analogue and digital with a DAC which converts digital angle in analogue output just like a potentiometer.

## Claims

1. A pilot control unit for an aircraft comprising a DC voltage rotary position sensor (200) comprising:
a shaft and magnet assembly (290) comprising a rotatable shaft (210) having a magnet (220) provided thereon, said shaft and magnet assembly (290) being rotatable about an axis of rotation X to create a rotary magnetic field;
a first printed circuit board (PCB) (230) located at a first side of said magnet (220) and on said axis of rotation X;
said first PCB (230) having a first integrated circuit (IC) (250) and a second IC (260) provided thereon,
a second PCB (240) located at said first side of said magnet (220) and on said axis of rotation X;
said second PCB (240) having a first IC (251) and a second IC (261) provided thereon;
each IC being configured to sense the direction of said magnetic field as said magnet (220) rotates about said axis X;
wherein each IC (250, 251, 260, 261) provides a position output;
wherein at least one of said outputs is a redundant output; and
wherein each IC (250, 251, 260, 261) comprises magnetic field direction sensors.

2. The pilot control unit of claim 1 wherein said first PCB (230) has said first IC (250) provided on a first face of said first PCB (230) and said second IC (260) is provided on a second, opposite face of said first PCB (250).

3. The pilot control unit of claim 1 wherein said second PCB has said first IC (251) provided on a first face of said second PCB (240) and wherein said second IC (261) is provided on a second, opposite face of said second PCB (240).

4. The pilot control unit of any preceding claim wherein said IC or ICs (250, 251, 260, 261) comprises a switch output.

5. A method of making a pilot control unit for an aircraft, said method comprising making a DC voltage rotary position sensor (200) by providing a magnet (220) on a rotating shaft (210) to create a rotatable shaft and magnet assembly (290), said magnet and shaft assembly (290) being configured to being rotatable about an axis of rotation X to create a magnetic field;
providing a first printed circuit board (PCB) (230) at a first side of said magnet (220) and on said axis of rotation X;
providing a first IC (250) and a second IC (260) on said first PCB (230);
providing a second PCB (240) at said first side of said magnet (220) and on said axis of rotation X;
providing a first IC (251) and a second IC (261) on said second PCB;
each IC being configured to sense the direction of said magnetic field as said magnet (220) rotates about said axis X;
wherein each IC (250, 251, 260, 261) provides a position output;
wherein at least one of said outputs is a redundant output;
wherein each IC (250, 251, 260, 261) comprise magnetic field direction sensors.

## Patentansprüche

1. Pilotsteuereinheit für ein Flugzeug, umfassend einen Gleichspannungs-Drehpositionssensor (200), umfassend:
eine Wellen- und Magnetanordnung (290), die eine drehbare Welle (210) mit einem darauf vorgesehenen Magneten (220) umfasst, wobei die Wellen- und Magnetanordnung (290) um eine Rotationsachse X drehbar ist, um ein rotierendes Magnetfeld zu erzeugen;
eine erste gedruckte Leiterplatte (PCB) (230), die auf einer ersten Seite des Magneten (220) und auf der Rotationsachse X angeordnet ist;
wobei die erste PCB (230) eine erste integrierte Schaltung (IC) (250) und eine darauf vorgesehene zweite IC (260) aufweist, eine zweite PCB (240), die auf der ersten Seite des Magneten (220) und auf der Rotationsachse X angeordnet ist;
wobei die zweite PCB (240) eine erste IC (251) und eine darauf vorgesehene zweite IC (261) aufweist;
wobei jede IC so konfiguriert ist, dass sie die Richtung des Magnetfelds erfasst, wenn sich der Magnet (220) um die Achse X dreht;
wobei jede IC (250, 251, 260, 261) eine Positionsausgabe bereitstellt;
wobei mindestens einer der Ausgänge ein redundanter Ausgang ist; und
wobei jede IC (250, 251, 260, 261) Magnetfeldrichtungssensoren umfasst.

2. Pilotsteuereinheit nach Anspruch 1, wobei die erste PCB (230) die erste IC (250) aufweist, die auf einer ersten Fläche der ersten PCB (230) bereitgestellt ist, und die zweite IC (260) auf einer zweiten, gegenüberliegenden Fläche der ersten PCB (250) bereitgestellt ist.

3. Pilotsteuereinheit nach Anspruch 1, wobei die zweite PCB die erste IC (251) aufweist, die auf einer ersten Fläche der zweiten PCB (240) bereitgestellt ist, und wobei die zweite IC (261) auf einer zweiten, gegenüberliegenden Fläche der zweiten PCB (240) bereitgestellt ist.

4. Pilotsteuereinheit nach einem der vorhergehenden Ansprüche, wobei die IC oder die ICs (250, 251, 260, 261) einen Schaltausgang umfassen.

5. Verfahren zum Herstellen einer Pilotsteuereinheit für ein Flugzeug, wobei das Verfahren das Herstellen eines Gleichspannungs-Drehpositionssensors (200) durch Folgendes umfasst:
Bereitstellen eines Magneten (220) auf einer Drehwelle (210), um eine drehbare Wellen- und Magnetanordnung (290) zu erzeugen, wobei die Magnet- und Wellenanordnung (290) konfiguriert ist, um um eine Rotationsachse X drehbar zu sein, um ein Magnetfeld zu erzeugen;
Bereitstellen einer ersten Leiterplatte (PCB) (230) auf einer ersten Seite des Magneten (220) und auf der Rotationsachse X;
Bereitstellen einer ersten IC (250) und einer zweiten IC (260) auf der ersten PCB (230);
Bereitstellen einer zweiten PCB (240) auf der ersten Seite des Magneten (220) und auf der Rotationsachse X;
Bereitstellen einer ersten IC (251) und einer zweiten IC (261) auf der zweiten PCB;
wobei jede IC so konfiguriert ist, dass sie die Richtung des Magnetfelds erfasst, wenn sich der Magnet (220) um die Achse X dreht;
wobei jede IC (250, 251, 260, 261) eine Positionsausgabe bereitstellt;
wobei mindestens einer der Ausgänge ein redundanter Ausgang ist;
wobei jede IC (250, 251, 260, 261) Magnetfeldrichtungssensoren umfasst.

## Revendications

1. Unité de commande pilote pour un aéronef comprenant un capteur de position rotatif à tension CC (200) comprenant :
un ensemble arbre et aimant (290) comprenant un arbre rotatif (210) sur lequel est prévu un aimant (220), ledit ensemble arbre et aimant (290) pouvant tourner autour d'un axe de rotation X pour créer un champ magnétique rotatif ;
une première carte de circuit imprimé (PCB) (230) située sur un premier côté dudit aimant (220) et sur ledit axe de rotation X ;
ladite première PCB (230) ayant un premier circuit intégré (CI) (250) et un second CI (260) prévus dessus,
une seconde PCB (240) située sur ledit premier côté dudit aimant (220) et sur ledit axe de rotation X ;
ladite seconde PCB (240) ayant un premier CI (251) et un second CI (261) prévus dessus ;
chaque CI étant configuré pour détecter la direction dudit champ magnétique lorsque ledit aimant (220) tourne autour dudit axe X ;
dans laquelle chaque CI (250, 251, 260, 261) fournit une sortie de position ;
dans laquelle au moins l'une desdites sorties est une sortie redondante ; et
dans laquelle chaque CI (250, 251, 260, 261) comprend des capteurs de direction de champ magnétique.

2. Unité de commande pilote selon la revendication 1, dans laquelle ladite première PCB (230) a ledit premier CI (250) prévu sur une première face de ladite première PCB (230) et ledit second CI (260) est prévu sur une seconde face opposée de ladite première PCB (250).

3. Unité de commande pilote selon la revendication 1, dans laquelle ladite seconde PCB a ledit premier CI (251) prévu sur une première face de ladite seconde PCB (240) et dans laquelle ledit second CI (261) est prévu sur une seconde face opposée de ladite seconde PCB (240).

4. Unité de commande pilote selon une quelconque revendication précédente, dans laquelle ledit CI ou lesdits CI (250, 251, 260, 261) comprennent une sortie de commutation.

5. Procédé de fabrication d'une unité de commande pilote pour un aéronef, ledit procédé comprenant la fabrication d'un capteur de position rotatif à tension CC (200) par
la fourniture d'un aimant (220) sur un arbre rotatif (210) pour créer un ensemble arbre et aimant rotatif (290), ledit ensemble arbre et aimant (290) étant configuré pour pouvoir tourner autour d'un axe de rotation X afin de créer un champ magnétique ; la fourniture d'une première carte de circuit imprimé (PCB) (230) sur un premier côté dudit aimant (220) et sur ledit axe de rotation X ;
la fourniture d'un premier CI (250) et d'un second CI (260) sur ladite première PCB (230) ;
la fourniture d'une seconde PCB (240) sur ledit premier côté dudit aimant (220) et sur ledit axe de rotation X ;
la fourniture d'un premier CI (251) et d'un second CI (261) sur ladite seconde PCB ;
chaque CI étant configuré pour détecter la direction dudit champ magnétique lorsque ledit aimant (220) tourne autour dudit axe X ;
dans lequel chaque CI (250, 251, 260, 261) fournit une sortie de position ;
dans lequel au moins l'une desdites sorties est une sortie redondante ;
dans lequel chaque CI (250, 251, 260, 261) comprend des capteurs de direction de champ magnétique.
